## Europäisches Patentamt

## European Patent Office

## Office européen des brevets

(11) Veröffentlichungsnummer: **0 062 684**
**B1**

(12) **EUROPÄISCHE PATENTSCHRIFT**

(45) Veröffentlichungstag der Patentschrift:
**27.12.84**

(51) Int. Cl.³: **C 10 K 1/12,** B 01 D 53/14,
C 10 C 1/10, C 01 B 17/16

(21) Anmeldenummer: **81102684.8**

(22) Anmeldetag: **09.04.81**

(54) **Verfahren zum Entfernen von Ammoniak und Schwefelwasserstoff aus Gasen, insbesondere Kohlendestilationsgasen.**

(43) Veröffentlichungstag der Anmeldung:
**20.10.82 Patentblatt 82/42**

(45) Bekanntmachung des Hinweises auf die Patenterteilung:
**27.12.84 Patentblatt 84/52**

(84) Benannte Vertragsstaaten:
**BE FR GB NL**

(56) Entgegenhaltungen:
**DE - A - 1 669 323**
**DE - A - 2 505 959**
**DE - A - 2 537 640**
**DE - A - 2 734 497**
**DE - A - 3 027 220**
**DE - B - 1 155 426**
**DE - B - 1 175 381**

(73) Patentinhaber: **Ruhrkohle Aktiengesellschaft,
Rellinghauser Strasse 1, D-4300 Essen 1 (DE)**

(72) Erfinder: **Volmari, Josef, Heidelbeerweg 16,
D-4630 Bochum (DE)**

ACTORUM AG

## Beschreibung

Die Erfindung betrifft ein Verfahren zum Entfernen von Ammoniak und Schwefelwasserstoff aus Gasen, insbesondere Kohlendestillationsgasen durch Absorption des Ammoniaks mittels Wasser und des Schwefelwasserstoffs in mindestens zwei Entschwefelungsstufen, wobei in einer Stufe mit Ammoniaklösungen und in einer anderen Stufe durch Alkalihydroxidlösung entschwefelt wird.

Es ist bekannt, Schwefelwasserstoff durch Natron- oder Kalilauge aus Gasen zu entfernen und die sich hierbei gebildete Ablauge zum Freisetzen von gebundenem Ammoniak zu benutzen.

Das erfolgt zusammen mit dem Ablaufwasser aus der Ammoniakwäsche in sogenannten Ammoniakabtreibern. In den Ammoniakabtreibern wird das Wasser von allen flüchtigen Bestandteilen befreit und anschliessend in die Vorfluter entlassen.

Bei derartigen Verfahren fallen grosse Mengen Natriumsulfitablauge an. Das ist insbesondere der Fall, wenn nach dem in der DE-PS Nr. 2505959 beschriebenen Verfahren gearbeitet wird. Danach wird der im Koksofengas enthaltene Schwefelwasserstoff vorwiegend durch Alkalikarbonatlösungen ausgewaschen. In der Praxis ist das aber unwirtschaftlich, weil Natron- und Kalilauge besonders teure Einsatzmittel sind. Ausserdem erfordert die bei diesem Verfahren gewählte Kreislaufführung des Waschmittels infolge der grossen Verweilzeit und der dadurch bedingten Nebenreaktionen einen erhöhten Waschmittelbedarf.

Aus der DE-A Nr. 2734497 ist ein Verfahren zum Entfernen von Schwefelwasserstoff aus Kohlendestillationsgasen bekannt. Nach diesem Verfahren werden die Rohgase zunächst einer Ammoniakwäsche unterworfen, bevor sie einem Schwefelwasserstoffwäscher zugeführt werden. Aus beiden Wäschen wird Waschwasser abgezogen und gemeinsam einem Abtreiber zugeführt. Das ist nur möglich, wenn eine Behandlung in einem Ammoniumsulfatsättiger folgt, um das Ammoniak wieder von den sauren Bestandteilen zu trennen. Das stellt eine wirtschaftlich unbefriedigende Lösung dar. Der Erfindung liegt daher die Aufgabe zugrunde, die Wirtschaftlichkeit der bekannten Verfahren zur Entfernung von Ammoniak und Schwefelwasserstoff aus Gasen, insbesondere Kohlendestillationsgasen zu verbessern.

Dabei soll gemäss der Erfindung nur soweit Alkalilauge für die Reinigung der Gase eingesetzt werden, wie es wirtschaftlich vertretbar ist. Das wird dadurch erreicht, dass die Waschlösungen aus der Entschwefelungsstufe mit Ammoniak wie auch aus der Entschwefelungsstufe mit Alkalihydroxid gemeinsam in einer Entsäuerungskolonne von Schwefelwasserstoff und Cyanwasserstoff befreit werden. Ferner wird die Entschwefelung in zwei Schritten durchgeführt.

Der erste Schritt ist an sich bekannt und besteht darin, dass zunächst nur soweit regeneriertes Ammoniakwasser verwendet wird, dass eine gewisse Vorentschwefelung, vorzugsweise von 40 bis 50%, bewirkt wird und danach schwefelwasserstofffreies Ammoniakgas zugeführt und das so behandelte Gas anschliessend einer Ammoniakwaschstufe zugeführt wird. Im zweiten Schritt ist hinter der Ammoniakwäsche eine zusätzliche Entschwefelungsstufe vorgesehen, die mit Natron- oder Kalilauge beaufschlagt wird.

Dieses Verfahren erlaubt eine selektive Entschwefelung des Gases mit Alkalilauge und kurzen Verweilzeiten. Infolge der kurzen Verweilzeiten werden schädliche Nebenreaktionen, wie beispielsweise die Natriumkarbonatbildung durch Absorption von Kohlendioxyd vermieden. Gebundenes Ammoniak wird nur soweit freigesetzt, wie es für die Gewinnung von Zusatzammoniak zur Gasentschwefelung wirtschaftlich ist und soweit es zur Erzielung vorgegebener Abwasserqualitäten notwendig wird.

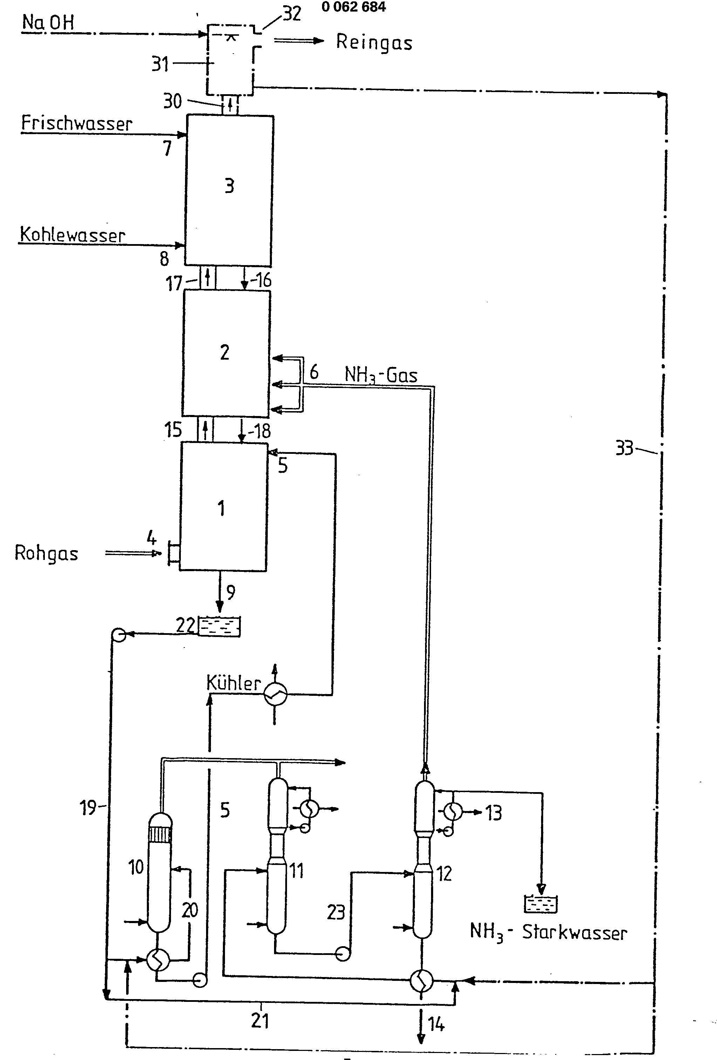

Für den Gewässerschutz ist nicht nur ein geringer Anteil von gebundenem Ammoniak nützlich, sondern auch ein pH-Wert im Bereich zwischen 7 und 8. Demgegenüber werden bei üblichen Verfahren häufig pH-Werte zwischen 9,5 und 11,5 gemessen. Gegenüber den Nachteilen eines solchen pH-Wertes ist die mit dem erfindungsgemässen Verfahren verbundene Gewässerbelastung durch Ammoniaksalze vergleichsweise vernachlässigbar gering. Im übrigen hat die erfindungsgemässe Freisetzung des Ammoniaks in der vorgeschalteten Entsäuerungskolonne gegenüber der Freisetzung von Ammoniak nach den bekannten Verfahren im Ammoniakabtreiber drei wesentliche Vorteile. Es wird der Gehalt an freiem Ammoniak in der Waschlösung erheblich erhöht. Ferner wird der Schwefelwasserstoffabtrieb aus der Waschlösung durch Einwirkung des Kohlendioxyds, das auch bei einer selektiven Entschwefelung in gewisser Menge beim Waschprozess absorbiert und bei der Desorption frei gesetzt wird, wesentlich verbessert. Darüber hinaus wird es möglich, den Schwefelwasserstoff konzentriert aus dem Entsäurer einer direkten Weiterverarbeitung zu Schwefelsäure oder Schwefel, ohne Umweg über den Ammoniumsulfatsättiger zuzuführen und dem Ammoniakabtreiber fern zu halten. Dieses ist besonders wichtig für die Gewinnung von Starkwasser bzw. schwefelfreiem Ammoniak. Das ist nach dem aus der DE-A Nr. 2734497 bekannten Verfahren nicht möglich und trägt massgeblich zur Wirtschaftlichkeit des erfindungsgemässen Verfahrens bei. In der Zeichnung ist ein Ausführungsbeispiel der Erfindung dargestellt.

Das von einem Gassauger oder einem Gasnachkühler kommende Gas (Kohlendestillationsgas) wird mit beispielsweise 8 g $H_2S/Nm^3$ und 6 g $NH_3/Nm^3$ über eine Leitung 4 einem Absorber 1 einer ersten Waschstufe zugeführt, der zur Vorentschwefelung dient. Das Gas wird in dieser Stufe mit entsäuertem $NH_3$-Kreislaufwasser und einer $NH_3$-Waschlösung aus einem Absorber 2 einer nachfolgenden Entschwefelungsstufe gewaschen und dadurch auf 30 bis 50% vorentschwefelt.

Das Kreislaufwasser gelangt über eine Leitung 5 (im oberen Bereich) in den Absorber 1. Dort entspricht die Flüssigkeitszusammensetzung der Anreicherung des Kreislaufwassers. Die $NH_3$-

Waschlösung des Absorbers 2 fliesst über eine Leitung 18 dem Absorber 1 zu.

Die Anreicherung der Waschlösung im Absorber 1 wird von der Gaszusammensetzung und der Temperatur beeinflusst. Während der Verweilzeit in dem Absorber 1 erhöht sich der $H_2S$-Gehalt in der Waschlösung von 2,3 auf 7 g $H_2S$/l. Durch Beaufschlagung mit 0,6 l/$Nm^3$ Kreislaufwasser aus der Leitung 5 wird 35% des im Rohgas enthaltenen Schwefelwasserstoffs ausgewaschen. Von dem $H_2S$-Vorwäscher bzw. Absorber 1 gelangt das Gas über eine Leitung 15 in den Absorber 2. Im Absorber 2 wird mit dem Ablaufwasser eines eine dritte Stufe bildenden Absorbers 3 bei gleichzeitiger Zugabe von weitgehend schwefelwasserstofffreiem Ammoniak gewaschen. Das Ammoniak wird dosiert durch Leitungen 6 an mehreren Stellen in den unteren und mittleren Bereichen des Absorbers 2 eingeblasen.

In dem der Nachentschwefelung dienenden Absorber 2 kann das Gas bei ausreichender Zugabe reinen Ammoniaks und Anwendung relativ grosser Wassermengen für die Rückwaschung des Zusatzammoniaks weitgehend von Schwefelwasserstoff befreit werden. Aus ökonomischen Gründen und wegen grösserer Betriebssicherheit wird nach dem Vorschlag der Erfindung die Gasentschwefelung in dem Absorber 2 nicht so weit wie technisch möglich betrieben, sondern es wird die Feinentschwefelung in einer weiteren Stufe 31 durchgeführt. Das Ablaufwasser des Absorbers 3 gelangt über eine Leitung 16 in den Absorber 2.

Das Gas tritt durch eine Leitung 17 in den Absorber 3 ein. Dort wird es mit Frischwasser aus einer Leitung 7 beaufschlagt. Ein Teil des Frischwassers kann durch schwach angereicherte $NH_3$-Wässer, beispielsweise Kohlewasser als Gaskondensat, ersetzt werden. Diese Wässer werden durch eine Leitung 8 in den Absorber 3 gepumpt. In der Beladung mit $NH_3$ und $H_2S$ entsprechen die Wässer in etwa der Konzentration des Waschwassers.

Alle in den Prozess gegebenen Waschlösungen werden im Gegenstrom zum Gas geführt. Sie gelangen über eine Leitung 9 in einen Sumpf 22 der ersten Entschwefelungsstufe (Absorber 1), aus dem sie über eine Leitung 19 entnommen wird. Das im Kreislauf strömende, über die Leitung 5 dem Absorber 1 zugeführte $NH_3$-Wasser wird über die Leitung 19 und die Leitung 20 einer ersten Entsäuerungskolonne 10 zugeführt und hier in bekannter Weise durch thermische Zersetzung etwa zu 60 bis 70% entsäuert. Es gelangt dann durch die Leitung 5 in den Absorber 1 zurück.

Das übrige Waschwasser aus 22, welches in der Menge etwa dem Frisch- und Kohlewasser 7, 8 entspricht, muss für die Herstellung schwefelwasserstofffreier Ammoniakdämpfe stärker als das Kreislaufwasser Leitung 5 entsäuert werden. Das erfolgt in bekannter Weise nach den in den DE-PS Nrn. 1155426 und 1175381 offenbarten Verfahren unter Erzeugung reiner Ammoniakdämpfe und gleichzeitiger Erzeugung von etwa 20%igem Ammoniakstarkwasser.

Das aus dem Sumpf 22 über Leitungen 19 und 21 abgezogene Ammoniakrohwasser wird in einer weiteren Entsäuerungskolonne 11 entschwefelt und über eine Leitung 23 einer Nachentsäuerungskolonne 12 zugeführt, in der es von allen flüchtigen Bestandteilen, insbesondere $NH_3$, befreit wird. Danach gelangt das Wasser durch eine Leitung 14 ins Abwasser.

In der Nachentsäuerungskolonne 12 erfolgt eine direkte Kühlung und Nachentsäuerung der aufsteigenden Dämpfe, so dass aus dem Kopf der Kolonne 12 reines Ammoniakgas entnommen und über die Leitung 6 in den Absorber 2 geblasen werden kann. Für die Ammoniakproduktion wird Ammoniakstarkwasser aus dem Kühlkreislauf 13 oder Ammoniakdampf aus dem Kopf der Kolonne 12 entnommen. Bei Gasentschwefelungen bis zu 80% erübrigt sich ggf. die Entsäuerungskolonne 11. Es genügt dann, das gesamte Rohwasser aus Leitungen 19, 20 in der Kolonne 10 auf etwa 70% zu entsäuern und eine Teilmenge hiervon in der Kolonne 12 zur Gewinnung von Ammoniakgas zu verarbeiten.

Das im Absorber 3 mit Frischwasser 7 und Kohlewasser 8 behandelte Gas tritt durch eine Leitung 30 in einen Wäscher 31. In dem Wäscher 31 wird das Gas mit einer Alkalihydroxidlösung behandelt. Die Alkalihydroxidlösung ist eine 2 bis 10%ige Lösung.

Mit der Alkalihydroxidlösung wird der Schwefelwasserstoff je nach Notwendigkeit bis auf Stadtgasreinheit aus dem Gas ausgewaschen. Das entstandene Reingas wird durch eine Leitung 32 beliebiger Verwendung zugeführt. Die im letzten Wäscher 31 anfallende Waschlösung wird am Wäscherfuss abgezogen und durch eine Leitung 33 sowohl der Kolonne 10 als auch der Kolonne 11 zugeführt.

Die Leitung 33 mündet in Abzweigungen sowohl in der Leitung 19 als auch in der Leitung 21, so dass eine Vermischung der aus dem Wäscher 31 abgezogenen Waschlösung mit der aus dem Sumpf 22 abgezogenen Waschlösung (Rohwasser) eintritt. Infolgedessen wird die Waschlösung aus den Entschwefelungsstufen 1, 2, 3 mit Ammoniak gemeinsam mit der Waschlösung aus der Entschwefelungsstufe 31 mit Alkalihydroxid in den Entsäuerungskolonnen 10, 11 von Schwefelwasserstoff und ggf. Cyanwasserstoff befreit.

Im unteren Drittel der Entsäuerungskolonne 10 bzw. 11 werden die im Wasser gelösten Gase, die vorwiegend als Ammoniumhydrosulfid und Ammoniumcarbonat vorliegen, durch Wärmeeinwirkung freigemacht. Die in den Kolonnen aufsteigenden Dämpfe werden im oberen Drittel durch direkte Berieselung mit konzentrierter wässeriger Ammoniaklösung so gekühlt, dass ein Rücklauf entsteht. Die hierdurch erzielten langen Verweilzeiten ermöglichen, dass das $CO_2$ in Lösung geht und dadurch den Abtrieb des Schwefelwasserstoffs und die Bindung des Ammoniaks fördert.

Aus Ammoniak und Kohlendioxid bildet sich zunächst Ammoniumcarbamat, das zu Ammoniumcarbonat bzw. -bicarbonat umgewandelt wird. Durch diese Verfahrensweise wird es möglich, den Schwefelwasserstoff selektiv aus der Waschlösung zu entfernen und in Konzentrationen von über 80% am Kopf der Kolonnen abzuführen.

Das dem Sumpf der Entsäuerungskolonne 11 verlassende $NH_3$-Wasser enthält neben $H_2S$ (ca. 0,5-3,0 g/l) noch erheblich $CO_2$ (ca. 4 g/l) und ist deshalb als Waschlösung für eine Gasentschwefelung nicht besonders geeignet. $CO_2$ bildet Ammoniumcarbonat und reduziert den Gehalt an freiem $NH_3$ in der Lösung und damit das Absorptionsvermögen für $H_2S$.

Dieser Nachteil wird durch gemeinsame Entsäuerung der Waschlösungen aus den Entschwefelungsstufen mit Ammoniaklösungen 1, 2, 3 und der Stufe mit Alkalihydroxidlösung 31 dadurch ausgeglichen, dass durch Spaltung der fixen Ammoniumverbindungen $NH_3$ frei wird. Eine unerwünscht hohe Anreicherung der Waschlösung an Alkalisalzen wird dadurch verhindert, dass kontinuierlich ein Teil der entsäuerten Waschlösung über die Nachentsäuerungskolonne 12 ausgeschleust wird.

Im der Nachentsäuerungskolonne 12 werden durch Erwärmung auf 105-108° C alle flüchtigen Bestandteile aus dem Wasser entfernt. Die in der Kolonne aufsteigenden Dämpfe, vorwiegend $NH_3$, $CO_2$, Wasserdampf und geringe Mengen $H_2S$ werden mit einer konzentrierten Ammoniaklösung 13 direkt gekühlt.

Hierbei reichert sich die im Kreislauf geführte Kühllösung sehr stark mit $NH_3$, $CO_2$ und $H_2S$ an. Dadurch wird es möglich, die mit dem Aufgabewasser in die Kolonne gebrachten sauren Komponenten in einer relativ kleinen Flüssigkeitsmenge zu binden und durch kontinuierliche Abnahme aus dem Kühlkreislauf zu entfernen. Aus dem Kopf der Kolonne 12 entweicht ein reines Ammoniakgas, das zur Bindung des $H_2S$ bei der Gasreinigung in der Stufe 2 verwendet wird.

Nachfolgend ist ein Betriebsfall der erfindungsgemässen Anlage im einzelnen beschrieben.

*Beispiel:*

Rechnung für 1000 m³ Gas/h
1000 m³ Koksofengas entstehen bei der Verkokung von 2,86 t Kohle.

Durch Kohlefeuchtigkeit von ca. 10% und Bildungswasser, etwa 4%, entsteht ein Kohlewasser, das neben anderen Stoffen etwa 3 g freies und etwa 3 g gebundenes Ammoniak/l enthält.

Ammoniak liegt überwiegend in Form von Ammoniumcarbonat und Ammoniumsulfid vor und kann ohne Basenzusatz durch Destillation aus diesen Verbindungen abgetrieben werden.

Dagegen können fixe Ammoniakverbindungen nur durch starke Basen, wie Kalziumhydroxyd und Alkalilaugen aufgeschlossen werden.

Beispiel für Zusammensetzung fixer $NH_3$-Verbindungen im Kohlewasser:

| | | |
|---|---|---|
| Ammoniumsulfat | $(NH_4)_2SO_4$ | 9,5% |
| Ammoniumthiosulfat | $(NH_4)_2S_2O_3$ | 25,0% |
| Ammoniumchlorid | $(NH_4)$ Cl | 55,5% |
| Ammoniumrhodanid | $(NH_4)$ CNS | 11,0% |

Wegen der Schädlichkeit der Inhaltsstoffe kann das Kohlewasser in der anfallenden Form nicht in öffentliche Gewässer geleitet werden. Es muss zumindest von allen flüchtigen Bestandteilen befreit sein und nach den künftigen Mindestanforderungen an Abwässer, entsprechend dem Wasserhaushaltsgesetz, zu einem wesentlichen Teil auch von den fixen Ammoniakverbindungen befreit werden.

Die notwendige Aufarbeitung des Kohlenwassers wird mit einem besonderen Nutzeffekt verbunden. Zunächst wird das Kohlewasser als Absorptionsmittel bei der Gasreinigung eingesetzt und mit Ammoniak und Schwefelwasserstoff angereichert. Danach lässt es sich besonders wirtschaftlich mit anderen Absorptionslösungen aus der Ammoniak- und $H_2S$-Wäsche aufarbeiten.

In dem Beispiel wird das Kohlewasser in einer Menge von 0,4 m³/1000 m³ Gas in die untere Zone des $NH_3$-Wäschers 3 gegeben und durchfliesst nacheinander die $H_2S$-Absorber 2 und 1 und reichert sich dabei an mit beispielsweise:

20 g $NH_3$/l, 7 g $H_2S$/l, 7 g $CO_2$/l und mit geringen Mengen HCN

Das Kohlewasser enthält vor der Aufgabe in den Absorber etwa 0,5 $H_2S$/l und bewirkt durch die Anreicherung auf 7 g $H_2S$/l und durch Zugabe von gasförmigem Ammoniak eine etwa 30%ige $H_2S$-Entfernung aus dem Gas.

Der Unterschied zwischen den Entsäuerungskolonnen 10 und 11 besteht darin, dass in der Entsäuerungskolonne 10 nur das Ammoniakwasser entsäuert wird, das als Waschlösung durch die Leitung 5 in den Absorber 1 zurückgeführt wird. Hier wird mit einem geringeren Wärmebedarf als in der Kolonne 11 eine nur etwa 60-70%ige Schwefelwasserstoffentfernung aus dem Ammoniakwasser erreicht, die aber für eine Vorentschwefelung des Gases auf etwa 50% ausreichend ist.

In der Entsäuerungskolonne 11 kann ohne Ammoniakverluste der Schwefelwasserstoff weitgehend aus der Lösung entfernt werden, und durch Abtrennung des Kohlendioxyds in der Verstärkersäule der Nachentsäuerungskolonne 12 wird es möglich, einerseits reines Ammoniakgas zu erzeugen und andererseits die Ammoniakproduktion in Form eines Ammoniakstarkwassers zu gewinnen.

Bei einem Aufgabewasser mit 20 g freiem $NH_3$/l, 7 g $H_2S$/l und 7 g $CO_2$/l verlässt das Wasser die Entsäuerungskolonne 10 mit 17 g $NH_3$/l, 2,3 g $H_2S$/l und 4 g $CO_2$/l und die Entsäuerungskolonne 11 mit 20 g $NH_3$/l, 0,5 g $H_2S$/l und 6,5 g $CO_2$/l.

Der geringere $NH_3$-Gehalt bei der Kolonne 10 ist auf die Ammoniakverluste zurückzuführen, die mit den sauren Bestandteilen den Kopf der Kolonne verlassen. Bei Bindung des $H_2S$ Ammoniumsulfid und des $CO_2$ zu Ammoniumcarbonat verbleiben im Ablauf des Entsäurers 10 nur 11,6 g nicht an Säuren gebundenes Ammoniak, d.h. maximal 68% des als frei bezeichneten Ammoniaks sind für eine $H_2S$-Absorption aus dem Gas nutzbar. Im Ablauf der Kolonne 11 verbleiben 14,5 g/l freies Ammoniak, entsprechend 72,5%. Die Cyanverbindungen sind hier der Einfachheit halber vernachlässigt worden.

Erfindungsgemäss wird der Gehalt an freiem Ammoniak im Ablauf der Entsäuerungskolonnen 10, 11 dadurch erhöht, dass die Waschlösung aus der Entschwefelungsstufe 31, die vorwiegend aus Na₂S besteht, dem gesamten Waschwasser aus 22 vor der Entsäuerung zugesetzt wird, und damit die fixen Ammoniakverbindungen gleichzeitig mit dem Entsäuerungsvorgang gespalten und dabei das Ammoniak freigesetzt wird.

Je Molekül NH₃ wird zur Freisetzung 1 mol NaOH benötigt, das entspricht einem Gewichtsverhältnis NaOH zu NH₃ = 2,35.

Wird die Natronlauge zuvor für die H₂S-Entfernung aus dem Gas verwendet, so sind stöchiometrisch je Mol H₂S 2 mol NaOH bei Bildung von Na₂S notwendig. Das entspricht 2,35 kg NaOH/kg H₂S. Das bedeutet, dass für die Bindung von 1 kg H₂S die gleiche Menge NaOH benötigt wird, die auch für die Freisetzung von 1 kg fixem Ammoniak erforderlich ist. Hierbei ist berücksichtigt, dass sich nicht nur Na₂S, sondern auch NaHS, NaCN und Na₂CO₃ bildet.

In dem Beispiel werden durch Alkalilaugen in der Entschwefelungsstufe 31 1,2 kg H₂S/1000 m³ Gas entsprechend 15% des im Rohgas enthaltenen Schwefelwasserstoffs ausgewaschen. Durch die Aufarbeitung dieser Alkaliwaschlösung in den NH₃-Wasserentsäurern werden 1,2 kg fixes Ammoniak freigesetzt, mit dem stöchiometrisch weitere 15% des im Gas enthaltenen Schwefelwasserstoffs entfernt werden können. Durch die vorgeschlagene Verfahrensweise lässt sich mit einem relativ geringem Einsatz von Alkalilauge der Entschwefelungseffekt des Gases steigern, und durch Spaltung der fixen Ammoniakverbindung in der Entsäuerungskolonne die Betriebskosten dadurch senken, dass die Kreislaufwaschlösung für die Vorentschwefelung und die Erzeugung des für die H₂S-Bindung notwendigen Ammoniaks wesentlich reduziert werden können.

**Patentansprüche**

1. Verfahren zum Entfernen von Ammoniak und Schwefelwasserstoff aus Gasen, insbesondere Kohlendestillationsgasen durch Absorption des Ammoniaks mittels Wasser und des Schwefelwasserstoffs in mindestens zwei Entschwefelungsstufen, wobei in einer Stufe mit Ammoniaklösungen und in einer anderen Stufe mit einer Alkalihydroxidlösung entschwefelt wird, dadurch gekennzeichnet, dass die Waschlösungen aus den Entschwefelungsstufen mit Ammoniak (1, 2, 3) wie auch aus der Entschwefelungsstufe mit Alkalihydroxid (31) gemeinsam in mindestens einer Entsäuerungskolonne (10, 11) von Schwefelwasserstoff und Cyanwasserstoff befreit werden, wobei aus der Entsäuerungskolonne (10) ein bis zu 60 bis 70% entsäuertes NH₃-Wasser abgezogen und als Kreislaufwasser (5) in den Absorber (1) zurückgeführt wird, während das aus der Entsäuerungskolonne (11) abgezogene NH₃-Wasser in einer Nachentsäuerungskolonne (12) in reines Ammoniak und Restbestandteile zerlegt und das Ammoniak (6) in den Absorber (2) zurückgeführt wird.

2. Verfahren nach Anspruch 1, gekennzeichnet durch
a) eine Vorentschwefelung mit entsäuertem NH₃-Kreislaufwasser (5) und einer NH₃-Waschlösung (18) aus dem Absorber (2), gefolgt von
b) einer Entschwefelung in einer Zwischenstufe (2) mit schwefelwasserstofffreiem Ammoniak aus der Nachentsäuerungskolonne (12), und weiter gefolgt von
c) einer Restentschwefelung mit Alkalilauge.

3. Verfahren nach den Ansprüchen 1 und 2, dadurch gekennzeichnet, dass im unteren Bereich der Entsäuerungskolonnen (10, 11) die sauren Bestandteile der Waschlösung freigesetzt werden und im oberen Teil der Kolonne (11) durch direkte Kühlung der aufsteigenden Dämpfe das Kohlendioxid durch Rektifikation in den unteren Bereich zurückgeführt wird.

**Claims**

1. A process for the separation of ammonia and hydrogen sulphide from gases, in particular coal distillation gases by the absorption of the ammonia with water and of the hydrogen sulphide in at least two desulphurisation steps in which it is desulphurised in one step with ammonia solutions and in another step with an alkali metal hydroxide solution, characterised in that the washings from the desulphurisation step with ammonia (1, 2, 3) and also from the desulphurisation step with alkali metal hydroxide (31) are separated together in at least one deacidification column (10, 11) from hydrogen sulphide and hydrogen cyanide, such that up to 60 to 70% acidified NH₃-water is drawn off from the deacidification column (10) and is returned as circulating water (5) into the absorber (1), while the NH₃-water removed from the deacidification column (11) is decomposed in a post-deacidification column (12) into pure ammonia and other components and the ammonia (6) is returned into the absorber (2).

2. A process according to Claim 1, characterised by
(a) a pre-desulphurisation with deacidified NH₃-circulating water (5) and a NH₃-washing (18) from the absorber (2), followed by
(b) a desulphurisation in an intermediate stage (2) with hydrogen sulphide-free ammonia from the post-deacidification column (12), and further followed by
(c) a residual desulphurisation with alkali liquor.

3. A process according to Claims 1 and 2, characterised in that the acid components of the washing are removed in the lower region of the desulphurisation columns (10, 11), and the carbon dioxide, from rectification in the lower region, is returned into the upper part of the column (11) by direct cooling of the rising vapours.

## Revendications

1. Procédé pour éliminer l'ammoniac et l'acide sulfhydrique de gaz, en particulier de gaz de distillation du charbon, par absorption de l'ammoniac au moyen d'eau et de l'acide sulfhydrique dans au moins deux étages de désulfuration, dans lequel une désulfuration est effectuée dans un étage avec des solutions d'ammoniac et dans un autre étage avec une solution d'hydroxyde de métal alcalin, caractérisé en ce que les solutions de lavage provenant de l'étage de désulfuration avec de l'ammoniac (1, 2, 3) ainsi que de l'étage de désulfuration avec de l'hydroxyde de métal alcalin (31) sont conjointement libérées dans au moins une colonne de désacidification (10, 11) de l'acide sulfhydrique et de l'acide cyanhydrique, une eau contenant du $NH_3$, désacidifiée jusqu'à 60 à 70%, étant prélevée de la colonne de désacidification (10) et recyclée dans le dispositif d'absorption (1) sous la forme d'eau de recyclage (5), tandis que l'eau contenant du $NH_3$, prélevée de la colonne de désacidification (11), est décomposée en ammoniac pur et en éléments résiduaires dans une colonne de désacidification postérieure (12), l'ammoniac (6) étant ramené dans le dispositif d'absorption (2).

2. Procédé suivant la revendication 1, caractérisé par
a) une désulfuration préalable avec de l'eau de recyclage contenant du $NH_3$, désacidifiée (5), et une solution de lavage contenant du $NH_3$ (18) provenant du dispositif d'absorption (2), suivie
b) d'une désulfuration dans un étage intermédiaire (2) avec de l'ammoniac exempt d'acide sulfhydrique provenant de la colonne de désacidification postérieure (12), et suivie encore
c) d'une désulfuration résiduaire avec une lessive de métal alcalin.

3. Procédé suivant les revendications 1 et 2, caractérisé en ce que, dans la zone inférieure des colonnes de désacidification (10, 11), les éléments acides de la solution de lavage sont libérés et en ce que, dans la partie supérieure de la colonne (11), le dioxyde de carbone est, par refroidissement direct des vapeurs ascendantes, ramené dans la zone inférieure par rectification.

0 062 684